# EUROPEAN PATENT APPLICATION

(11) **EP 1 359 542 A2**
(43) Date of publication of application: **05.11.2003**
(21) Application number: 03252666.7
(22) Date of filing: 28.04.2003
(51) Int. Cl.: G06T 1/00

(54) **Digitally distorting an image while preserving its visual integrity**

(30) Priority: 03.05.2002 US 137935
(71) Applicant: Hewlett-Packard Company, Palo Alto, CA 94304 (US)
(72) Inventor: Silverstein, D. Amnon, Mtn. View, CA 94040 (US)
(74) Representative: Exell, Jonathan Mark

(57) **Abstract**

Methods of modifying source images and image streams are described. These methods may be used, for example, to render digital data embedded within the image unrecoverable or to prevent splicing modified portions of the images to recreate the source image. One method includes the step of providing a source image stream (510) comprising a plurality of source image frames (512). A distorted grid (520) is applied to the source image stream to generate a modified image stream (350). The grid is distorted spatially, temporally, or both. The distortion is designed to introduce frequency domain distortion sufficient to render any embedded data unrecoverable without introducing significant visually perceptible changes to the source image or image stream.

## Description

This invention relates to the field of image processing. In particular, this invention is drawn to modifying the digital representation of the image without significant impact on the perceptive visual integrity of the image.

Images may be easily stored, distributed, and modified in digital form. Typically, the image is digitally represented as a collection or grid of identically sized and shaped picture elements or "pixels". Each pixel is assigned a value corresponding to the color or graylevel of the corresponding spatial region of the source image. The quality of reconstruction of a continuous tone image is limited by the size of the pixels and the range of values available for representing individual colors or graylevels.

Once in digital form, other information may be embedded into the digital image. Information such as the author, publisher, copyright, date, or source, for example, may be embedded into the image for identification or perhaps to thwart copyright violations in the form of a digital watermark. Subsequent owners of the image copyright, however, may desire legitimate removal of reference to prior owners.

Generally the embedding techniques attempt to embed the data with little or no visually perceptive changes to the image. The information or even the fact that the information is embedded in the image may be very difficult to determine without specific knowledge about the information or the method used to embed the information. This raises security concerns for entities that need to control dissemination of information. In particular, such an entity may want to ensure that any information embedded in the image is rendered unrecoverable in order to thwart unauthorized dissemination of the information.

One technique uses amplitude modulation to embed information into the digital image. Amplitude modulation approaches, however, are susceptible to noise or filters which can effectively degrade the data integrity while substantially preserving the visual appearance of the image. As a result, other techniques are typically used to embed the information.

Frequency domain or spectral manipulation techniques may be quite sophisticated and resistant to attempts to modify, alter, or remove the embedded data. Typically, the information is hidden in the frequency domain so that it is spread throughout the entire image. The robustness of frequency domain embedded data thwarts legitimate modification or removal of the embedded data.

In view of limitations of known systems and methods, methods for introducing frequency domain distortion into source images or image streams are described.

According to an aspect of the present invention, there is provided a method of modifying an image includes the step of providing a source image. The source image is sampled with a spatially distorted grid to generate a modified image wherein the modified image is substantially visually identical to the source image.

According to another aspect of the present invention, there is provided a method of providing a portion of an image includes the step of receiving a request for a selected portion of a source image. A spatially distorted grid is applied to the selected portion to generate a modified selected portion. The modified selected portion of the source image is provided in response to the request.

According to another aspect of the present invention, there is provided a method of modifying an image stream includes the step of providing a source image stream comprising a plurality of frames of images. The source image stream is sampled with a distorted grid to generate a modified image stream comprising a plurality of modified image frames. The distorted grid defines pixels having a relative difference in a selected characteristic of size, shape, of time.

According to another aspect of the present invention, there is provided a method of providing a portion of an image stream includes the step of receiving a request for a selected portion of a source image stream comprising a plurality of source image frames. A distorted grid is applied to the selected portion to generate a modified selected portion. The modified selected portion of the source image stream is provided in response to the request.

Other features and advantages of the present invention will be apparent from the accompanying drawings and from the detailed description that follows below.

The present invention is illustrated by way of example and not limitation in the figures of the accompanying drawings, in which like references indicate similar elements and in which:
Figure 1 illustrates sampling a source image to generate a digital representation of the source image.
Figure 2 illustrates various spatially distorted sampling grid embodiments.
Figure 3 illustrates a method of distorting a source image.
Figure 4 illustrates a method of providing a distorted portion of a source image in response to a request.
Figure 5 illustrates application of various distorted sampling grids to a source image stream.
Figure 6 illustrates a method of providing a modified source image stream from a source image stream by application of a distorted grid.

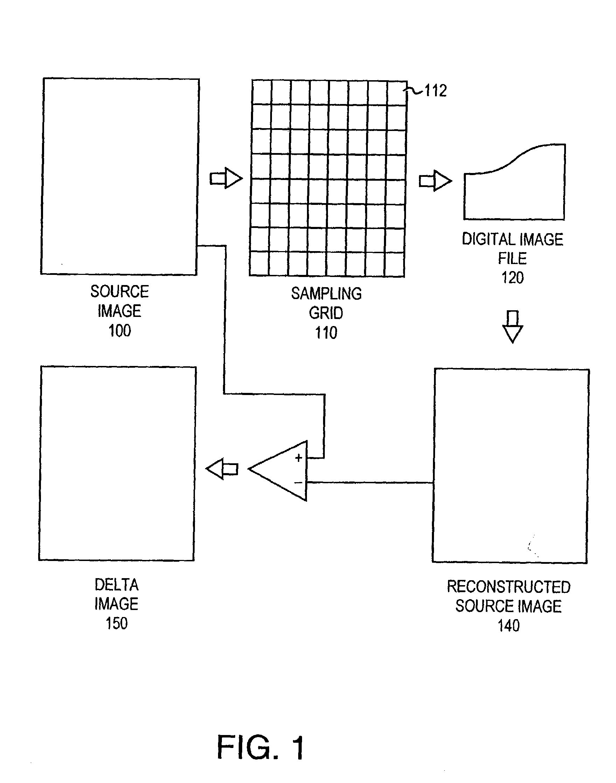

Figure 1 illustrates the process of digitizing and reconstructing a source image. The source image may be analog (e.g., continuous tone) or digital in nature. The source image 110 is sampled with a sampling grid 120 to generate digitized image data such as digital image file 130. The sampling grid 120 is spatially invariant. Typically, each pixel 112 of the sampling grid represents an average of the spatially corresponding region of the source image. Each pixel 112 is the same size and shape throughout the sampling grid.

The digitized image data can then be used to generate a reconstructed source image 140 comparable to the original source image 110. The differences between the original source image 110 and the reconstructed source image 140 indicated by delta image 150 depend upon a number of factors including resolution of the sampling grid, number of discrete values available for representing distinct colors or graylevels, the resolution of the original source image, etc. Although the differences may be perceptible in the absence of the remainder of the image context (i.e., perceptible variations in the delta image 150), the differences may be imperceptible or very difficult to perceive when the remainder of the image context is present. Thus the differences between reconstructed source image 140 and source image 110 may be visually imperceptible when a visual comparison of the two is performed.

Reproductions of analog images (e.g., continuous tone source images) tend to experience visually perceptible image degradation within a small number of generations of reproduction. In contrast, a digital data file may be duplicated identically generation after generation. Thus a subsequent copy of digital data file 120 can produce a reconstructed source image 140 identical to the reconstructed source image generated from the original digital data file 120.

Information can be embedded into the digitized version of the source image through spectral manipulation. Spectral or frequency domain manipulation spreads the information throughout the image in such a way that the visually perceptible differences in the reconstructed images with or without the embedded data are negligible or non-existent. Such embedded information may be highly resistant to discovery or removal. Spectral domain manipulation relies on the fact that the pixels are of uniform shape and size and spatial regularity.

The embedded data may be rendered unrecoverable while preserving the visual integrity of the image by applying a spatially distorted sampling grid to the source image containing the data. In one embodiment, the amount and type of distortion are chosen so that a comparison of images reconstructed from 1) digital data derived from application of a distorted sampling grid and 2) digital data derived from application of a non-distorted sampling grid results in visually imperceptible or negligible differences.

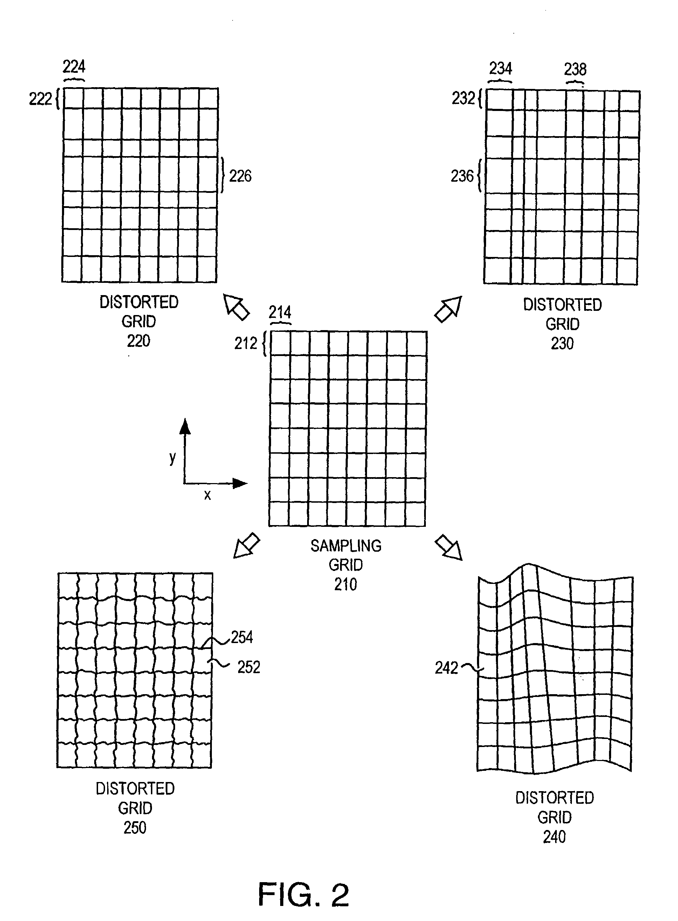

Figure 2 illustrates a regular sampling grid 210 and some irregular or distorted sampling grids 220-250. Each pixel of the regular sampling grid 210 has the same shape, height 212, and width 214. Grid 220 is distorted along one dimension of the x-y plane. In particular, the height of the pixels varies (e.g., 222, 226) while the width 224 is constant. Grid 230 is distorted along two dimensions of the x-y plane while preserving the orthogonality of the pixels relative to each other. The height 232, 236 and width 234, 238 of the pixels varies. Grid 240 is also distorted along two dimensions of the x-y plane. In this case the pixel 242 shapes are irregular and may not be rectangular in nature. Yet another distorted grid 250 introduces distortion to the pixel 252 at a local level. The pixel boundaries 254, for example, may be modified using random noise to create fine local pixel distortion. These distortions play havoc with the spectral content of the image, but can result in imperceptible visual differences as long as the distortions are small relative to the size or shape of the non-distorted pixel 212.

Generally, the digitized image data is generated using the distorted sampling grid. No accommodation is made for the use of a distorted sampling grid when reconstructing the source image from the digital image data. Any reconstruction technique or method presumes that the digitized image data corresponds to the use of a regular sampling grid.

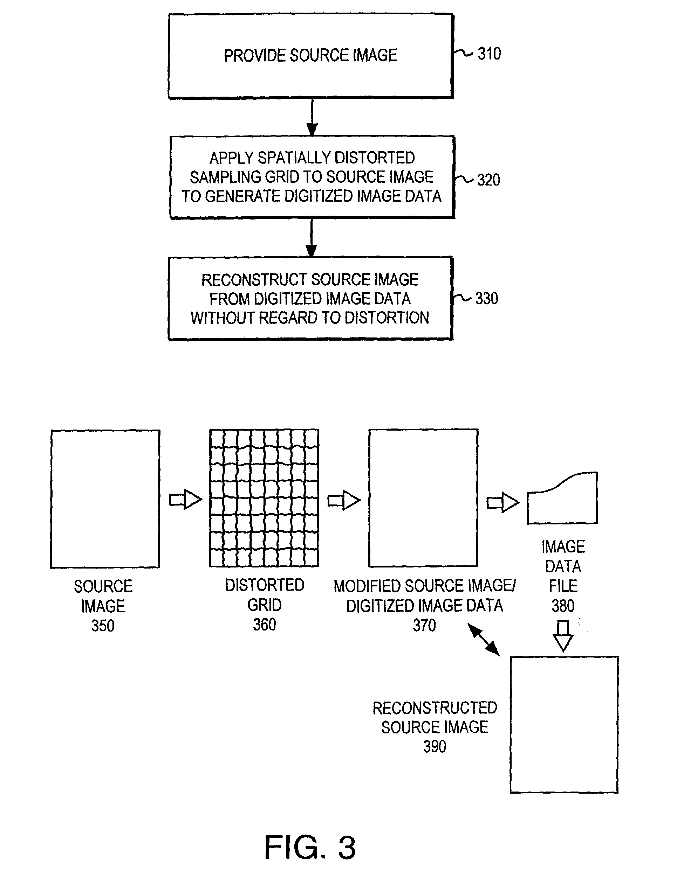

Figure 3 illustrates one embodiment of a method of distorting the source image. The source image 350 is provided in step 310. A spatially distorted sampling grid 360 is applied to the source image to generate a digitized data corresponding to a modified image 370 in step 320. The spatially distorted grid defines a plurality of pixels wherein the pixels differ with respect to at least one characteristic such as size or shape. In one embodiment, the spatial distortion of the sampling grid is scale-invariant (fractile) distortion, where the apparent amplitude of distortion at one scale level is substantially the same as the apparent amplitude at another scale level. Thus, for example, the relative amplitude of distortion at one level of magnification is substantially the same as the relative amplitude of distortion when viewed at another level of magnification.

Each pixel reflects an average pixel value for the spatially corresponding region of the source image. The digitized image data may be distributed or stored as a digitized data file 380 for use when generating the reconstructed source image 390 as provided for in step 330. Due to the robustness of the digital form, the image data file 380 can be used to reliably reproduce the reconstructed source image 390 identical to the modified source image 370.

The values for the pixels defined by the distorted grid may be determined through interpolation. If the source image is continuous tone, then a regular sampling grid without spatial distortions can first be used to generate a digitized source image that may be used for interpolating pixel values for the modified source image. In one embodiment, pixel values for the modified image are interpolated from the corresponding nearest pixels in the source image.

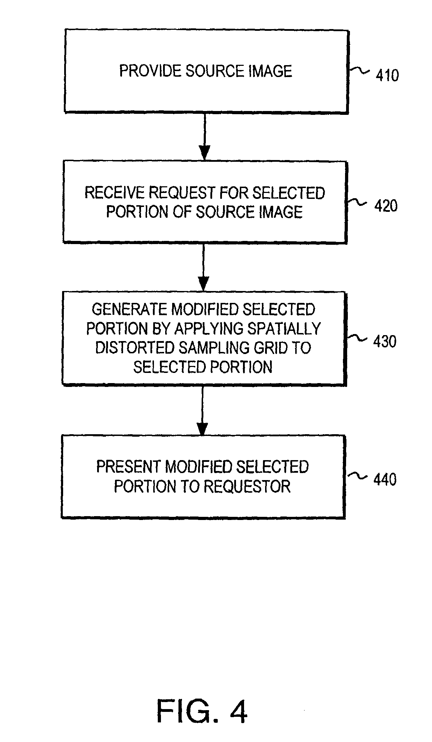

Aside from rendering any embedded data unrecoverable, another practical use is to permit users to view portions of a larger image while preventing them from "stitching" the portions together to recreate the larger image without artifacts. An organization that sells maps, for example, may want to permit potential customers to view small areas of a mapped region in greater detail for the purpose of judging the quality of the map image. Figure 4 illustrates a method for presenting portions of a larger image.

A source image is provided in step 410. In step 420, a request for a selected portion of the source image is received. Such a request may be generated, for example, by selecting a region of a displayed source image with a pointing device such as a computer mouse. The selected portion need not be from the same source image. Although the selected portion corresponds spatially to the same region of the source image, the selected portion may actually be a higher resolution or magnified version of the source image.

In step 430, a spatially distorted grid is applied to the selected portion of the source image to create a modified selected portion. The modified selected portion is then provided to the requestor in response to the request in step 440.

A mapping application, for example, might provide the user with a zoomed in version of the map. Although the differences between the selected portion and the modified selected portion may be visually imperceptible, modified selected portions (i.e., zoomed in areas) corresponding to contiguous regions of the source image cannot be "stitched" together to recreate the source image without introducing visual artifacts.

Movies or image streams having a plurality of source image frames may similarly be distorted to render embedded data unrecoverable. Typically, an image stream is defined by a sequential plurality of temporally displaced frames of images. The temporal displacement between frames is typically constant throughout the image stream. Due to the added dimension of time, the sampling grid may be spatially distorted, temporally distorted, or both spatially and temporally distorted for image streams.

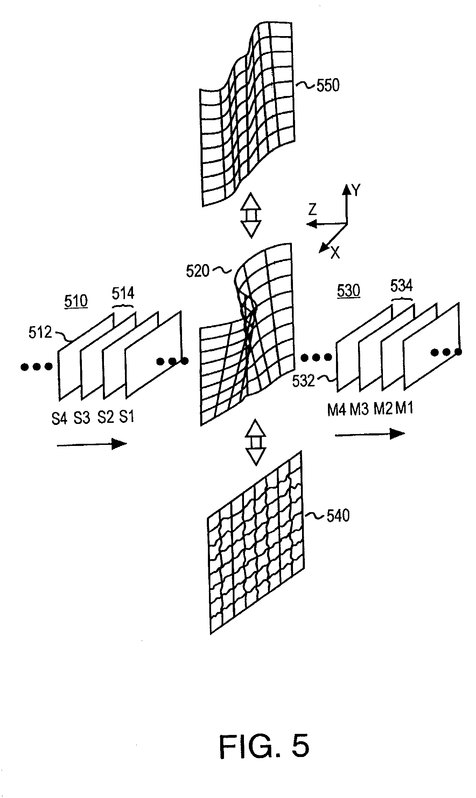

Figure 5 illustrates a distorted grid 520 applied to a selected portion (frames S1-S4) of source image stream 510 to generate modified image stream 530 including frames M1-M4. The temporal distance 514 between frames in the source image stream 510 is the same as the temporal distance 534 between frames of the modified image stream 530. Each frame 512 of the selected portion of the source image stream has a corresponding modified frame 532 in the modified image stream.

If the sampling grid 520 is only spatially distorted, then all the pixels of the sampling grid have the same temporal value. In addition, there is no temporal displacement between the modified frame 532 and the corresponding frame 512 of the source image stream. A weighted spatial interpolation can be used to determine a value for each pixel of a selected frame 532 of the modified image stream from the spatially nearest pixels of the corresponding frame 512 of the source image stream.

In one embodiment, the sampling grid is temporally distorted. In particular, the sampling grid may be temporally distorted such that all the pixels do not have a same temporal value. Pixel values for temporal displacement may be calculated by a weighted temporal interpolation between corresponding pixels of the nearest frames. If both spatial and temporal distortion are used, then a weighted spatial and a weighted temporal interpolation may be combined to calculate pixel values for the modified frame.

In one embodiment, the applied grid distortion varies throughout the source image stream. Thus the spatial distortion or the temporal distortion or both may change as the distortion grid is applied to different frames of the source image stream to produce the modified image stream. This may be accomplished, for example, by selecting different grids 540, 550 during the course of generating the modified image stream.

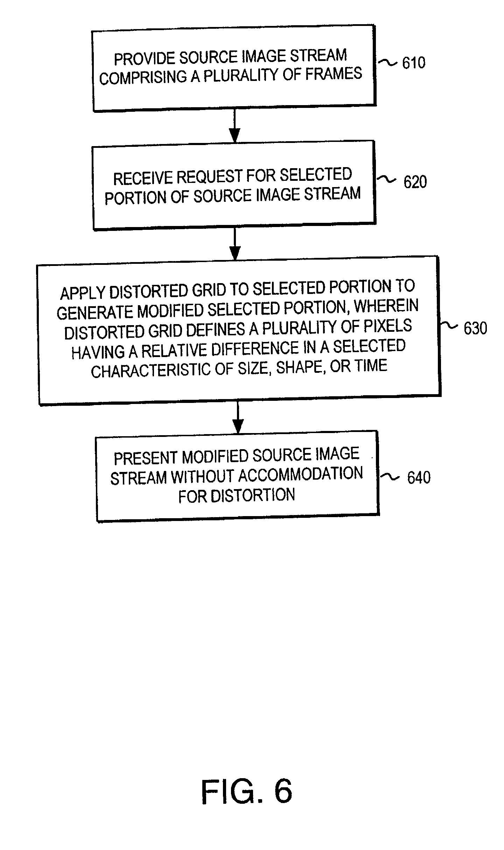

Figure 6 illustrates a method of applying a distortion grid to an image stream. A source image stream comprising a plurality of image frames is provided in step 610. A request for a selected portion of the source image stream is received in step 620. In step 630, a distorted grid is applied to the selected portion of the source image stream to generate a modified image stream comprising a plurality of modified image frames. The distorted grid defines pixels having a relative difference in a selected characteristic of size, shape, or time. In step 640, the modified image stream is subsequently presented without accommodation for the distortion as if each frame represents a spatially and temporally invariant grid of pixels. As long as the amount of distortion is relatively small, any embedded information may be rendered unrecoverable while preserving the visual integrity of the reconstructed image stream compared to the source image stream.

In the preceding detailed description, the invention is described with reference to specific exemplary embodiments thereof. Various modifications and changes may be made thereto without departing from the broader spirit and scope of the invention as set forth in the claims. The specification and drawings are, accordingly, to be regarded in an illustrative rather than a restrictive sense.

The disclosures in United States patent application no. 10/137,935 from which this application claims priority, and in the abstract accompanying this applications are incorporated herein by reference.

## Claims

1. A method of modifying an image, comprising the steps of:
a) providing a source image (350); and
b) sampling the source image with a spatially distorted grid (360) to generate a modified image (370), wherein the modified image is substantially visually identical to the source image.

2. The method of claim 1 wherein the spatially distorted grid defines pixels having a difference in a selected characteristic of size and shape.

3. The method of claim 1 or 2 wherein the source image is a continuous tone image.

4. The method of claim 1, 2 or 3 wherein the source image is defined by a regular grid of pixels having a same first size and a same first shape.

5. The method of any preceding claim wherein step b) further comprises the step of interpolating values for each pixel of the modified image from corresponding pixels of the source image.

6. A method of modifying an image stream, comprising the steps of:
a) providing a source image stream (510) comprising a plurality of frames (512) of distinct images; and
b) sampling the source image stream with a distorted grid (520) to generate a modified image stream (530) comprising a plurality of modified image frames (532), wherein the distorted grid defines pixels having a relative difference in a selected characteristic of size, shape, or time.

7. The method of claim 6 wherein the source image stream is a stream of continuous tone images.

8. The method of claim 6 or 7 wherein step b) further comprises the step of performing a weighted spatial interpolation to determine a value for each pixel of a selected frame of the modified image stream from the spatially nearest pixels of a corresponding selected frame of the source image stream.

9. The method of claims 6 or 7 wherein step b) further comprises the step of performing a weighted temporal interpolation to determine a value for each pixel of a selected frame of the modified image stream from the spatially nearest pixels of the nearest frames of the source image stream.

10. The method of claim 6, 7, 8 or 9, further comprising the step of varying at least one grid characteristic when sampling the image stream.
